# EUROPÄISCHE PATENTSCHRIFT

(11) **EP 1 303 844 B1**
(45) Veröffentlichungstag und Bekanntmachung des Hinweises auf die Patenterteilung: **19.05.2004**
(21) Anmeldenummer: 00956050.9
(22) Anmeldetag: 28.06.2000
(51) Int. Cl.: G06F 9/46, H04L 29/06, H04Q 9/00

(54) **SYSTEM UND VERFAHREN ZUR ÜBERTRAGUNG VON DATEN, INSBESONDERE ZWISCHEN EINEM ANWENDER- UND EINEM SERVERPROGRAMM IM BEREICH DER AUTOMATISIERUNGSTECHNIK MIT VERTEILTEN OBJEKTEN**
SYSTEM AND METHOD FOR TRANSMITTING DATA, ESPECIALLY BETWEEN A USER PROGRAMME AND A SERVER PROGRAMME IN THE FIELD OF AUTOMATION TECHNOLOGY WITH DISTRIBUTED OBJECTS
SYSTEME ET PROCEDE DE TRANSMISSION DE DONNEES NOTAMMENT ENTRE UN PROGRAMME UTILISATEUR ET UN PROGRAMME SERVEUR DANS LE DOMAINE DE LA TECHNOLOGIE D'AUTOMATISATION AVEC DES OBJETS DISTRIBUES

(30) Priorität: 30.06.1999 DE 19929751
(43) Veröffentlichungstag der Anmeldung: 23.04.2003
(73) Patentinhaber: SIEMENS AKTIENGESELLSCHAFT, 80333 München (DE)
(72) Erfinder: TALANIS, Thomas, D-91336 Heroldsbach (DE); PLAUM, Reiner, D-91052 Erlangen (DE); GEHRING, Hubert, D-90453 Nürnberg (DE)
(86) Internationale Anmeldenummer: PCT/DE2000/002106
(87) Internationale Veröffentlichungsnummer: WO 2001/001365

(56) Entgegenhaltungen:
- WO-A-98/02809
- LIN D D H ET AL: "AN ASYNCHRONOUS REMOTE PROCEDURE CALL SYSTEM FOR HETEROGENEOUS PROGRAMMING" PROCEEDINGS OF THE ANNUAL INTERNATIONAL PHOENIX CONFERENCE ON COMPUTERS AND COMMUNICATIONS,US,LOS ALAMITOS, IEEE COMP. SOC. PRESS, Bd. CONF. 10, 27. März 1991 (1991-03-27), Seiten 153-159, XP000299042 ISBN: 0-8186-2133-8
- HUANG Y -M ET AL: "URPC: A TOOLKIT FOR PROTOTYPING REMOTE PROCEDURE CALLS" COMPUTER JOURNAL,GB,OXFORD UNIVERSITY PRESS, SURREY, Bd. 39, Nr. 6, 1996, Seiten 525-540, XP000639358 ISSN: 0010-4620

## Beschreibung

Die Erfindung betrifft ein System und ein Verfahren zur Übertragung von Daten zwischen einem lokalen Datenverarbeitungssystem und einem entfernten Datenverarbeitungssystem über einen asynchronen Übertragungskanal.

Ein derartiges System kommt beispielsweise im Bereich der Automatisierungstechnik zum Bedienen und Beobachten von Automatisierungsgeräten wie beispielsweise speicherprogrammierbare Steuerungen, numerische Steuerungen und/oder Antrieben zum Einsatz.

Aus LIN D D H ET AL: "An asynchronous remote procedure call system for heterogeneous programming" proceedings of the annual international phoenix conference on computers and communications, US, Los Alamitos, IEEE Comp. Soc. PRESS, Bd. Conf. 10, 27. März 1991 (1991-03-27), Seiten 153-159, ISBN: 0-8186-2133-8, ist ein Steuermechanismus zur Unterstützung in einer heterogenen verteilten Programmierumgebung bekannt. Der Mechanismus basiert auf einem asynchronen Steurungsalgorithmus, der zur Zuordnung einer Vielzahl von Antworten eines Servers auf Anfrage eines Clients vorgesehen ist.

Der Erfindung liegt die Aufgabe zugrunde, auf einfache Weise eine sichere Synchronisation von Anwendungen in verteilten Systemen sicherzustellen.

Diese Aufgabe wird durch die Kombination der in den Ansprüchen 1, 9 bzw. 15 angegebenen Merkmale gelöst.

Hierdurch ergibt sich ein System zur Übertragung von Daten zwischen einem lokalen Datenverarbeitungssystem und einem entfernten Datenverarbeitungssystem über einen asynchronen Übertragungskanal, mit einem Speicher zur Speicherung mindestens eines vorgebbaren Parameters, der zur Identifizierung eines Aufrufs eines ersten Programms der lokalen Datenverarbeitungsvorrichtung, insbesondere eines Anwenderprogramms an ein zweites Programm der entfernten Datenverarbeitungsvorrichtung, insbesondere an ein Serverprogramm vorgesehen ist und mit einem in einer Antwort der entfernten Datenverarbeitungsvorrichtung an die lokale Datenverarbeitungsvorrichtung enthaltenen vorgebbaren Parameter zur Identifizierung und/oder Synchronisation der Antwort im ersten Programm.

Das Verfahren dient zur Übertragung von Daten zwischen einem lokalen Datenverarbeitungssystem und einem entfernten Datenverarbeitungssystem über einen asynchronen Übertragungskanal, bei dem bei einem Aufruf eines ersten Programms der lokalen Datenverarbeitungsvorrichtung, insbesondere eines Anwenderprogramms, an ein zweites Programm der entfernten Datenverarbeitungsvorrichtung, insbesondere an ein Serverprogramm ein vorgebbarer Parameter, der zur Identifizierung eines Aufrufs vorgesehen ist, gespeichert wird. In einer Antwort der entfernten Datenverarbeitungsvorrichtung an die lokale Datenverarbeitungsvorrichtung wird ein zweiter vorgebbarer Parameter zur Identifizierung und/oder Synchronisation der Antwort des ersten Programm von der entfernten Datenverarbeitungsvorrichtung an die lokale Datenverarbeitungsvorrichtung übermittelt und dort ausgewertet.

Die Datenübertragung vom lokalen Datenverarbeitungssystem zum entfernten Datenverarbeitungssystem erfolgt über einen asynchronen Übertragungskanal, so daß eine Synchronisation von Antwortdaten erforderlich ist. Für eine derartige Identifizierung und/oder Synchronisation der Antwortdaten wird mindestens ein vorgebbarer Parameter, der zur Identifizierung des Aufrufs eines ersten Programms, beispielsweise eines Anwenderprogramms, an ein zweites Programm, beispielsweise an ein Serverprogramm, vorgesehen ist, in der lokalen Datenverarbeitungsvorrichtung gespeichert. Dieser Parameter wird in die Antwortdaten, die an die lokale Datenverarbeitungsvorrichtung von der entfernten Datenverarbeitungsvorrichtung wieder zurückgesendet werden, eingebunden und in der lokalen Datenverarbeitungsvorrichtung wieder detektiert. Hierdurch erfolgt eine einfache Identifizierung und Synchronisation der Antwortdaten im Anwenderprogramm der lokalen Datenverarbeitungsvorrichtung.

Eine sichere Identifizierung der Antwort(en) und damit eine Zuordnung und Synchronisation der Programme kann in der Weise erfolgen, daß das System Mittel zum Vergleich des gespeicherten Parameters mit dem in der Antwort enthaltenen vorgebbaren Parameter aufweist.

Eine sehr wenig aufwendige Realisierung und Ausgestaltung des Parameters kann dadurch erzielt werden, daß der vorgebbare Parameter zumindest aus Teilen der vom ersten Programm an das zweite Programm übertragenen IDL (Interface Definition Language) gebildet wird.

Eine vorteilhafter Anwendungsfall des Systems darin, daß das System für einen Einsatz im Bereich der Automatisierungstechnik bei verteilten Systemen, insbesondere DCOM-Systemen vorgesehen ist.

Im folgenden wird die Erfindung anhand der in den Figuren dargestellten Ausführungsbeispiele näher beschrieben und erläutert.

Es zeigen:
- FIG 1: ein Blockschaltbild eines ersten Ausführungsbeispiels eines Systems zur Übertragung von Daten zwischen einem Anwender- und einem Serverprogramm und
- FIG 2: ein Blockschaltbild eines zweiten Ausführungsbeispiels eines Systems zur Übertragung von Daten zwischen einem Anwender- und einem Serverprogramm.

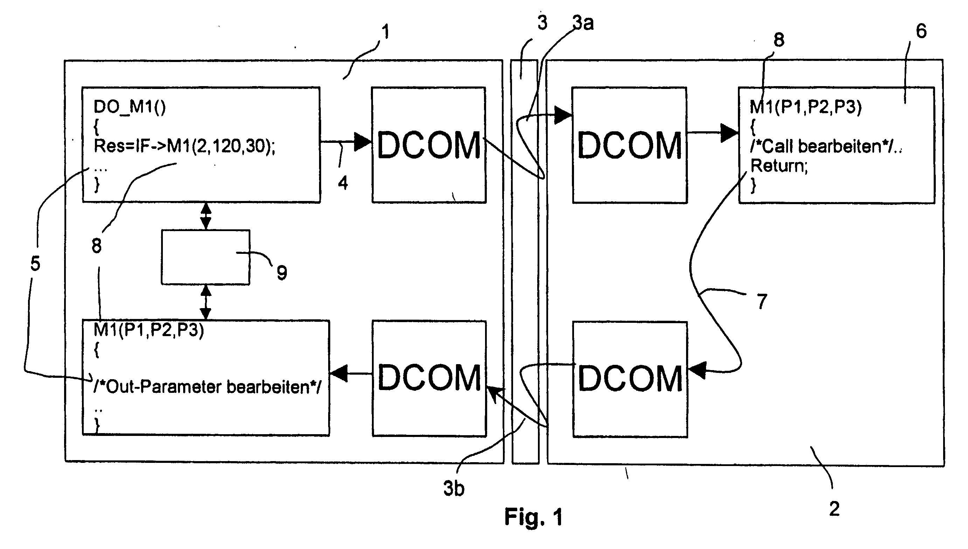

FIG 1 zeigt ein Blockschaltbild eines ersten Ausführungsbeispiels eines Systems zur Übertragung von Daten zwischen einem Anwenderprogramm 5 einer lokalen Datenverarbeitungsvorrichtung 1 und einem Serverprogramm 6 einer entfernten Datenverarbeitungsvorrichtung 2. Die Kommunikation zwischen der lokalen ersten Datenverarbeitungsvorrichtung 1 und der entfernten zweiten Datenverarbeitungsvorrichtung 2 erfolgt über einen asynchronen Übertragungskanal 3. Asynchron bedeutet in diesem Zusammenhang, daß die jeweiligen Sende- und Empfangsdaten in unterschiedlichen Übertragungskanälen ohne Synchronisation übertragen werden. Dies ist durch die Pfeile 3a (= Hinkanal) und dem Pfeil 3b (= Rückkanal) in der FIG 1 graphisch angedeutet. In der lokalen ersten Datenverarbeitungsvorrichtung 1 ist beispielhaft ein Anwenderprogramm 5 angedeutet, welches die Abfrage von Informationen und Daten aus einem Serverprogramm 6 der entfernten zweiten Datenverarbeitungsvorrichtung 2 erforderlich macht. Hierzu wird von dem Anwenderprogramm 5 der lokalen Datenverarbeitungsvorrichtung 1 ein Aufruf 4 an das Serverprogramm 6 der entfernten Datenverarbeitungsvorrichtung 2 gesendet. Bei dem in FIG 1 dargestellten Ausführungsbeispiel wird als vorgebbarer Parameter 8 (= M1) verwendet, dieser vorgebbare Parameter 8 (= M1) wird in die Antwort 7, die von der entfernten Datenverarbeitungsvorrichtung 2 über den Rückkanal 3b an die lokale Datenverarbeitungsvorrichtung 1 gesendet wird, eingebunden und im Anwenderprogramm 5 weiterverarbeitet. Anhand des vorgebbaren Parameters 8 (= M1) enthält das Anwenderprogramm 5 eine Möglichkeit zur Identifizierung und/oder Synchronisation des Anwenderprogramms 5. Die Detektion und Identifizierung des vorgebbaren Parameters 8 wird dadurch ermöglicht, daß der vorgebbare Parameter 8 im Speicher 9 der ersten Datenverarbeitungsvorrichtung 1 zwischengespeichert wird.

Mit Hilfe der in FIG 1 veranschaulichten Identifizierung und Synchronisation des Anwenderprogramms 5 wird es möglich, daß der Anwender ein synchrones Programmiermodell praktisch beibehalten kann, wodurch sich auch wartungsfreundlichere Client-Anwendungen ergeben. Eine vorteilhafte Anwendung besteht im Zusammenhang mit Client-Anwendungen in sogenannten Empeted-Systemen, beispielsweise sogenannten DCOM-Systemen (DCOM = Distributed Component Object Modelling). Die Systemleistung besteht insbesondere darin, daß das System die In-Parameter vom Stack speichert und diese wieder restauriert, bevor es den Anwender-Callback aufruft. Der Anwender-Callback ist dabei identisch zum original-Call aufgebaut. Hierdurch findet der Anwender seine In-Parameter unverändert wieder. Vorteilhafterweise wird als vorgebbarer Parameter die sogenannte IDL (Interface Definition Language) benutzt. Hierdurch entsteht ein geringer Aufwand.

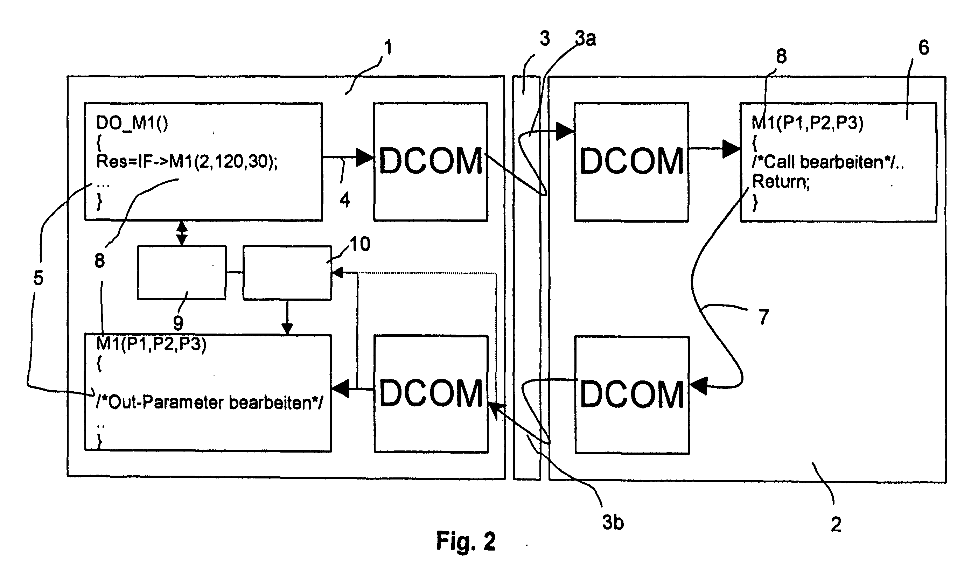

FIG 2 zeigt ein weiteres Ausführungsbeispiel eines Systems zur Übertragung von Daten zwischen einem Anwender- und einem Serverprogramm. Dabei werden im wesentlichen die bereits im Zusammenhang mit FIG 1 erläuterten Bezugszeichen verwendet, so daß auch auf die entsprechende Beschreibung zu FIG 1 verwiesen wird. Im Gegensatz zu dem in FIG 1 dargestellten Ausführungsbeispiel ist bei dem in FIG 2 gezeigten Ausführungsbeispiel eine Vergleichsvorrichtung 10 vorgesehen. Die Vergleichsvorrichtung vergleicht die im Speicher 9 gespeicherten Parameterdaten mit den vom Serverprogramm 6 übertragenen Anwortdaten 7. Mit Hilfe dieses Vergleichs wird sichergestellt, daß die Anwort 7 des Servers 6 anhand der Identifizierung des Parameters 8 in synchroner Weise ins Anwenderprogramm 5 eingebunden werden kann.

Zusammenfassend betrifft die Erfindung somit ein System und ein Verfahren zur Übertragung von Daten zwischen einem lokalen Datenverarbeitungssystem 1 und einem entfernten Datenverarbeitungssystem 2 über einen asynchronen Übertragungskanal 3. Zur Sicherstellung einer Synchronisation zwischen lokaler 1 und entfernter 2 Datenverarbeitungsvorrichtung wird vorgeschlagen, daß bei einem Aufruf 4 eines ersten Programms 5 der lokalen Datenverarbeitungsvorrichtung 1, insbesondere eines Anwenderprogramms, an ein zweites Programm 6 der entfernten Datenverarbeitungsvorrichtung 2, insbesondere an ein Serverprogramm, mindestens ein vorgebbarer Parameter 8 der zu übertragenden Daten in der lokalen Datenverarbeitungsvorrichtung 1 gespeichert wird und daß bei einer Antwort 7 der entfernten Datenverarbeitungsvorrichtung 2 an die lokale Datenverarbeitungsvorrichtung 1 der vorgebbare Parameter zur Identifizierung und/oder Synchronisation der Antwort 7 im ersten Programm 5 vorgesehen ist.

## Patentansprüche

1. System (1, 2, 3) zur Übertragung von Daten zwischen einer lokalen (1) und einer entfernten (2) Datenverarbeitungsvorrichtung über einen asynchronen Übertragungskanal (3) zum Einsatz bei verteilten Objekten im Bereich der Automatisierungstechnik mit
• einem der lokalen Datenverarbeitungsvorrichtung (1) zugeordneten Speicher (9) zur Speicherung mindestens eines vorgebbaren Parameters (8) zur Identifizierung eines Aufrufs (4), der zur Abfrage von Daten aus einem zweiten Programm (6) der entfernten Datenverarbeitungsvorrichtung (2) von einem ersten Programm (5) der lokalen Datenverarbeitungsvorrichtung (1) an das zweite Programm (6) der entfernten Datenverarbeitungsvorrichtung (2) gesendet wird, mit
• Mitteln zur Einbindung des vorgebbaren Parameters (8) in Antwortdaten (7), die von der entfernten Datenverarbeitungsvorrichtung (2) an die lokale Datenverarbeitungsvorrichtung (1) gesendet werden, mit
• Mitteln (10) zur Identifikation des vorgebbaren Parameters (8) in den Antwortdaten (7), und mit
• Mitteln zur Synchronisation der Antwortdaten in der Weise, dass durch die Identifizierung des vorgebbaren Parameters (8) in den Antwortdaten (7) die Antwortdaten des zweiten Programms (6) der entfernten Datenverarbeitungsvorrichtung (2) ins erste Programm (5) der lokalen Datenverarbeitungsvorrichtung eingebunden werden.

2. System nach Anspruch 1,
wobei das System Mittel (10) zum Vergleich des im Speicher (9) der lokalen Datenverarbeitungsvorrichtung (1) zwischengespeicherten Parameters (8) mit dem in den Antwortdaten (7) enthaltenen vorgebbaren Parameter (8) aufweist.

3. System nach einem der Ansprüche 1 oder 2,
wobei das erste Programm (5) der lokalen Datenverarbeitungsvorrichtung (1) ein Anwenderprogramm (5) und das zweite Programm (6) der entfernten Datenverarbeitungsvorrichtung (2) ein Serverprogramm (6) sind.

4. System nach einem der Ansprüche 1 bis 3,
wobei das System im Bereich der Automatisierungstechnik zum Bedienen und Beobachten von Automatisierungsgeräten wie beispielsweise speicherprogrammierbaren Steuerungen, numerischen Steuerungen und/oder Antrieben zum Einsatz kommt.

5. System nach einem der Ansprüche 1 bis 4,
wobei der vorgebbare Parameter (8) zumindest aus Teilen der vom ersten Programm (5) an das zweite Programm (6) übertragenen Interface Definition Language IDL gebildet wird.

6. System nach einem der Ansprüche 1 bis 5,
wobei das System im Zusammenhang mit Client-Anwendungen in sogenannten Embedded-Systemen, insbesondere bei DCOM-Systemen. angewendet wird.

7. System nach einem der Ansprüche 1 bis 6,
wobei die zweite Datenverarbeitungsvorrichtung (2) die von der ersten Datenverarbeitungsvorrichtung (1) empfangenen Parameter vom Stack speichert und diese wieder restauriert, bevor ein Callback an die erste Datenverarbeitungsvorrichtung (1) erfolgt.

8. System nach einem der Ansprüche 1 bis 7,
wobei der Anwender-Callback dabei identisch zum Original-Call aufgebaut ist.

9. Verfahren zur Übertragung von Daten zwischen einer lokalen Datenverarbeitungsvorrichtung (1) und einer entfernten Datenverarbeitungsvorrichtung (2) über einen asynchronen Übertragungskanal (3) zum Einsatz bei verteilten Objekten im Bereich der Automatisierungstechnik mit folgenden Schritten:
• Einbinden eines vorgebbaren Parameters (8) in einen Aufruf (4) eines ersten Programms (5) der lokalen Datenverarbeitungsvorrichtung (1) an ein zweites Programm (6) der entfernten Datenverarbeitungsvorrichtung (2) zur Abfrage von Daten aus dem zweiten Programm (6), wobei der vorgebbare Parameter (8), der zur Identifizierung des Aufrufs (4) vorgesehen ist, in der ersten Datenverarbeitungsvorrichtung (1) gespeichert wird,
• Einbinden des vorgebbaren Parameters (8) in Antwortdaten (7) der entfernten Datenverarbeitungsvorrichtung (2) an die lokale Datenverarbeitungsvorrichtung (1) auf den Aufruf (4),
• Identifizieren der von der entfernten Datenverarbeitungsvorrichtung (2) an die lokale Datenverarbeitungsvorrichtung (1) übermittelten Antwortdaten (7) in der ersten Datenverarbeitungsvorrichtung (1) anhand des vorgebbaren Parameters (8),
• Einbinden der Antwortdaten (7) durch die Identifizierung des vorgebbaren Parameters (8) ins erste Programm (5) der lokalen Datenverarbeitungsvorrichtung (1).

10. Verfahren nach Anspruch 9,
wobei der in den Antwortdaten (7) enthaltene Parameter (8) mit dem gespeicherten Parameter (8) verglichen wird.

11. Verfahren nach einem der Ansprüche 9 oder 10,
wobei der vorgebbare Parameter (8) zumindest aus Teilen der vom ersten Programm (5) an das zweite Programm (6) übertragenen Interface Definition Language IDL gebildet wird.

12. Verfahren nach einem der Ansprüche 9 bis 11,
wobei das Verfahren im Zusammenhang mit Client-Anwendungen in sogenannten Embedded-Systemen, insbesondere bei DCOM-Systemen angewendet wird.

13. Verfahren nach einem der Ansprüche 9 bis 12,
wobei die zweite Datenverarbeitungsvorrichtung (2) die von der ersten Datenverarbeitungsvorrichtung (1) empfangenen Parameter vom Stack speichert und diese wieder restauriert, bevor ein Callback an die erste Datenverarbeitungsvorrichtung erfolgt.

14. Verfahren nach einem der Ansprüche 9 bis 13,
wobei der Anwender-Callback dabei identisch zum Original-Call aufgebaut ist.

15. Automatisierungsgerät (1, 3) mit einer lokalen Datenverarbeitungsvorrichtung (1) zur Übertragung von Daten über einen asynchronen Übertragungskanal (3) zum Einsatz bei verteilten Objekten im Bereich der Automatisierungstechnik mit
• einem Speicher (9) zur Speicherung mindestens eines vorgebbaren Parameters (8) zur Identifizierung eines Aufrufs (4), der zur Abfrage von Daten aus einem zweiten Programm (6) einer entfernten Datenverarbeitungsvorrichtung (2) von einem ersten Programm (5) der lokalen Datenverarbeitungsvorrichtung (1) an das zweite Programm (6) der entfernten Datenverarbeitungsvorrichtung (2) gesendet wird, mit
• Mitteln zur Einbindung des vorgebbaren Parameters (8) in Antwortdaten (7), die von der entfernten Datenverarbeitungsvorrichtung (2) an die lokale Datenverarbeitungsvorrichtung (1) gesendet werden, mit
• Mitteln (10) zur Identifikation des vorgebbaren Parameters (8) in den Antwortdaten (7), und mit
• Mitteln zur Synchronisation der Antwortdaten in der Weise, dass durch die Identifizierung des vorgebbaren Parameters (8) in den Antwortdaten (7) die Antwortdaten des zweiten Programms (6) der entfernten Datenverarbeitungsvorrichtung (2) ins erste Programm (5) der lokalen Datenverarbeitungsvorrichtung eingebunden werden.

16. Automatisierungsgerät nach Anspruch 15,
wobei das Gerät Mittel (10) zum Vergleich des im Speicher (9) der lokalen Datenverarbeitungsvorrichtung (1) zwischengespeicherten Parameters (8) mit dem in den Antwortdaten (7) enthaltenen vorgebbaren Parameter (8) aufweist.

17. Automatisierungsgerät nach einem der Ansprüche 15 oder 16,
wobei das erste Programm (5) der lokalen Datenverarbeitungsvorrichtung (1) ein Anwenderprogramm (5) und dass das zweite Programm (6) der entfernten Datenverarbeitungsvorrichtung (2) ein Serverprogramm (6) sind.

18. Automatisierungsgerät nach einem der Ansprüche 15 bis 17,
wobei das Automatisierungsgerät im Bereich der Automatisierungstechnik zum Bedienen und Beobachten insbesondere von speicherprogrammierbaren Steuerungen, numerischen Steuerungen und/oder Antrieben zum Einsatz kommt.

19. Automatisierungsgerät nach einem der Ansprüche 15 bis 18,
wobei der vorgebbare Parameter (8) zumindest aus Teilen der vom ersten Programm (5) an das zweite Programm (6) übertragenen IDL (Interface Definition Language) gebildet wird.

20. Automatisierungsgerät nach einem der Ansprüche 15 bis 19,
wobei das Automatisierungsgerät im Zusammenhang mit Client-Anwendungen in sogenannten Embedded-Systemen, insbesondere bei DCOM-Systemen angewendet wird.

## Claims

1. A system (1, 2, 3) for transmitting data between a local data processing device (1) and a remote data processing device (2) over an asynchronous transmission channel (3) for use with distributed objects in the field of automation technology, said system having:
• a memory (9) assigned to the local data processing device (1) for storing at least one predefinable parameter (8) for identifying a call (4) which is sent by a first program (5) of the local data processing device (1) to a second program (6) of the remote data processing device (2) to query data from the second program (6) of the remote data processing device (2), having
• means for integrating the predefinable parameter (8) in response data (7) which is sent by the remote data processing device (2) to the local data processing device (1), having
• means (10) for identifying the predefinable parameter (8) in the response data (7), and having
• means for synchronizing the response data such that by identifying the predefinable parameter (8) in the response data (7), the response data of the second program (6) of the remote data processing device (2) is integrated in the first program (5) of the local data processing device.

2. The system according to Claim 1,
wherein the system has means (10) for comparing the parameter (8) buffered in the memory (9) of the local data processing device (1) with the predefinable parameter (8) contained in the response data (7).

3. The system according to one of the Claims 1 or 2,
wherein the first program (5) of the local data processing device (1) is a user program (5) and the second program (6) of the remote data processing device (2) is a server program (6).

4. The system according to one of the Claims 1 to 3,
wherein the system is used in the field of automation technology for operating and monitoring automation equipment such as, for example, stored program controllers, numerical controllers and/or drives.

5. The system according to one of the Claims 1 to 4,
wherein the predefinable parameter (8) is formed at least from parts of the Interface Definition Language IDL transmitted by the first program (5) to the second program (6).

6. The system according to one of the Claims 1 to 5,
wherein the system is used in connection with client applications in embedded systems, in particular in DCOM systems.

7. The system according to one of the Claims 1 to 6,
wherein the second data processing device (2) stores the parameters from the stack which were received from the first data processing device (1) and restores these parameters before a callback is sent to the first data processing device (1).

8. The system according to one of the Claims 1 to 7,
wherein the user callback is identical in structure to the original call.

9. A method for transmitting data between a local data processing device (1) and a remote data processing device (2) over an asynchronous transmission channel (3) for use with distributed objects in the field of automation technology, said method comprising the following steps:
• integration of a predefinable parameter (8) in a call (4) of a first program (5) of the local data processing device (1) sent to a second program (6) of the remote data processing device (2) to query data from the second program (6), wherein the predefinable parameter (8) which is provided for identifying the call (4) is stored in the first data processing device (1),
• integration of the predefinable parameter (8) in response data (7) of the remote data processing device (2) sent to the local data processing device (1) in response to the call (4),
• identification of the response data (7) transmitted by the remote data processing device (2) to the local data processing device (1) in the first data processing device (1) on the basis of the predefinable parameter (8),
• integration of the response data (7) by identification of the predefinable parameter (8) in the first program (5) of the local data processing device (1).

10. The method according to Claim 9,
wherein the parameter (8) contained in the response data (7) is compared with the stored parameter (8).

11. The method according to one of the Claims 9 or 10,
wherein the predefinable parameter (8) is formed at least from parts of the Interface Definition Language IDL transmitted by the first program (5) to the second program (6).

12. The method according to one of the Claims 9 to 11,
wherein the method is used in connection with client applications in embedded systems, in particular in DCOM systems.

13. The method according to one of the Claims 9 to 12,
wherein the second data processing device (2) stores the parameters from the stack which were received from the first data processing device (1) and restores these parameters before a callback is sent to the first data processing device.

14. The method according to one of the Claims 9 to 13,
wherein the user callback is identical in structure to the original call.

15. An automation device (1, 3) comprising a local data processing device (1) for transmitting data over an asynchronous transmission channel (3) for use with distributed objects in the field of automation technology, having
• a memory (9) for storing at least one predefinable parameter (8) for identifying a call (4) which is sent by a first program (5) of the local data processing device (1) to a second program (6) of a remote data processing device (2) to query data from the second program (6) of the remote data processing device (2), having
• means for integrating the predefinable parameter (8) in response data (7) which is sent from the remote data processing device (2) to the local data processing device (1), having
• means (10) for identifying the predefinable parameter (8) in the response data (7), and having
• means for synchronizing the response data such that as a result of the identification of the predefinable parameter (8) in the response data (7), the response data of the second program (6) of the remote data processing device (2) is integrated in the first program (5) of the local data processing device (1).

16. The automation device according to Claim 15,
wherein the device has means (10) for comparing the parameter (8) buffered in the memory (9) of the local data processing device (1) with the predefinable parameter (8) contained in the response data (7).

17. The automation device according to one of the Claims 15 or 16,
wherein the first program (5) of the local data processing device (1) is a user program (5) and the second program (6) of the remote data processing device (2) is a server program (6).

18. The automation device according to one of the Claims 15 to 17,
wherein the automation device is used in the field of automation technology for operating and monitoring in particular stored program controllers, numerical controllers and/or drives.

19. The automation device according to one of the Claims 15 to 18,
wherein the predefinable parameter (8) is formed at least from parts of the Interface Definition Language IDL transmitted by the first program (5) to the second program (6).

20. The automation device according to one of the Claims 15 to 19,
wherein the automation device is used in connection with client applications in embedded systems, in particular in DCOM systems.

## Revendications

1. Système (1, 2, 3) pour la transmission de données entre un dispositif de traitement de données local (1) et un dispositif de traitement de données distant (2) via un canal de transmission asynchrone (3) pour une utilisation avec des objets répartis dans le domaine de la technique d'automatisation, comportant
• une mémoire (9) associée au dispositif de traitement de données local (1) pour mémoriser au moins un paramètre pouvant être prescrit (8) pour l'identification d'un appel (4) qui, pour l'interrogation de données dans un deuxième programme (6) du dispositif de traitement de données distant (2), est envoyé par un premier programme (5) du dispositif de traitement de données local (1) au deuxième programme (6) du dispositif de traitement de données distant (2),
• des moyens pour intégrer le paramètre pouvant être prescrit (8) dans des données de réponse (7) qui sont envoyées par le dispositif de traitement de données distant (2) au dispositif de traitement de données local (1),
• des moyens (10) pour identifier le paramètre pouvant être prescrit (8) dans les données de réponse (7), et
• des moyens pour synchroniser les données de réponse de telle sorte que, par l'identification du paramètre pouvant être prescrit (8) dans les données de réponse (7), les données de réponse (7) du deuxième programme (6) du dispositif de traitement de données distant (2) sont intégrées dans le premier programme (5) du dispositif de traitement de données local.

2. Système selon la revendication 1, dans lequel le système comporte des moyens (10) pour comparer le paramètre pouvant être prescrit (8) mémorisé temporairement dans la mémoire (9) du dispositif de traitement de données local (1) au paramètre pouvant être prescrit (8) contenu dans les données de réponse (7).

3. Système selon l'une des revendications 1 ou 2, dans lequel le premier programme (5) du dispositif de traitement de données local (1) est un programme d'utilisateur (5) et le deuxième programme (6) du dispositif de traitement de données distant (2) est un programme de serveur (6).

4. Système selon l'une des revendications 1 à 3, dans lequel le système est utilisé dans le domaine de la technique d'automatisation pour contrôler et observer des appareils automatisés, par exemple des commandes par programme enregistré, des commandes numériques et/ou des moteurs.

5. Système selon l'une des revendications 1 à 4, dans lequel le paramètre pouvant être prescrit (8) est formé au moins de parties de l'Interface Definition Language IDL transmis du premier programme (5) au deuxième programme (6).

6. Système selon l'une des revendications 1 à 5, dans lequel le système est utilisé en relation avec des applications de client dans des systèmes intégrés dits Embedded, notamment dans des systèmes DCOM.

7. Système selon l'une des revendications 1 à 6, dans lequel le deuxième dispositif de traitement de données distant (2) mémorise les paramètres reçus par le premier dispositif de traitement de données local (1) de la pile et les restaure avant qu'un rappel s'effectue vers le premier dispositif de traitement de données local (1).

8. Système selon l'une des revendications 1 à 7, dans lequel le rappel d'utilisateur a une structure identique à l'appel original.

9. Procédé pour la transmission de données entre un dispositif de traitement de données local (1) et un dispositif de traitement de données distant (2) via un canal de transmission asynchrone (3) pour une utilisation avec des objets répartis dans le domaine de la technique d'automatisation, comportant les étapes suivantes :
• intégration d'un paramètre pouvant être prescrit (8) dans un appel (4) d'un premier programme (5) du dispositif de traitement de données local (1) à un deuxième programme (6) du dispositif de traitement de données distant (2) pour l'interrogation de données du deuxième programme (6), le paramètre pouvant être prescrit (8) qui est prévu pour l'identification de l'appel (4) étant mémorisé dans le premier dispositif de traitement de données local (1),
• intégration du paramètre pouvant être prescrit (8) dans des données de réponse (7) du dispositif de traitement de données distant (2) vers le dispositif de traitement de données local (1) suite à l'appel (4),
• identification des données de réponse (7), transmises du dispositif de traitement de données distant (2) au dispositif de traitement de données local (1), dans le premier dispositif de traitement de données local (1) à l'aide du paramètre pouvant être prescrit (8),
• intégration des données de réponse (7) par l'identification du paramètre pouvant être prescrit (8) dans le premier programme (5) du dispositif de traitement de données local (1).

10. Procédé selon la revendication 9, dans lequel on compare le paramètre (8) contenu dans les données de réponse (7) au paramètre (8) mémorisé.

11. Procédé selon l'une des revendications 9 ou 10, dans lequel on forme le paramètre pouvant être prescrit (8) au moins avec des parties de l'Interface Definition Language IDL transmis du premier programme (5) au deuxième programme (6).

12. Procédé selon l'une des revendications 9 à 11, dans lequel on utilise le procédé en relation avec des applications de client dans des systèmes intégrés dits Embedded, notamment dans des systèmes DCOM.

13. Procédé selon l'une des revendications 9 à 12, dans lequel le deuxième dispositif de traitement de données (2) mémorise les paramètres reçus par le premier dispositif de traitement de données (1) de la pile et les restaure avant qu'un rappel s'effectue vers le premier dispositif de traitement de données local.

14. Procédé selon l'une des revendications 9 à 13, dans lequel le rappel d'utilisateur a une structure identique à l'appel original.

15. Appareil automatisé (1, 3) comportant un dispositif de traitement de données local (1) pour la transmission de données via un canal de transmission asynchrone (3) pour une utilisation avec des objets répartis dans le domaine de la technique d'automatisation ainsi que
• une mémoire (9) pour mémoriser au moins un paramètre pouvant être prescrit (8) pour l'identification d'un appel (4) qui, pour l'interrogation de données dans un deuxième programme (6) du dispositif de traitement de données distant (2), est envoyé par un premier programme (5) du dispositif de traitement de données local (1) au deuxième programme (6) du dispositif de traitement de données distant (2),
• des moyens pour intégrer le paramètre pouvant être prescrit (8) dans des données de réponse (7) qui sont envoyées par le dispositif de traitement de données distant (2) au dispositif de traitement de données local (1),
• des moyens (10) pour identifier le paramètre pouvant être prescrit (8) dans les données de réponse (7), et
• des moyens pour synchroniser les données de réponse de telle sorte que, par l'identification du paramètre pouvant être prescrit (8) dans les données de réponse (7), les données de réponse (7) du deuxième programme (6) du dispositif de traitement de données distant (2) sont intégrées dans le premier programme (5) du dispositif de traitement de données local.

16. Appareil automatisé selon la revendication 15, dans lequel l'appareil comporte des moyens (10) pour comparer le paramètre pouvant être prescrit (8) mémorisé temporairement dans la mémoire (9) du dispositif de traitement de données local (1) au paramètre pouvant être prescrit (8) contenu dans les données de réponse (7).

17. Appareil automatisé selon l'une des revendications 15 ou 16, dans lequel le premier programme (5) du dispositif de traitement de données local (1) est un programme d'utilisateur (5) et le deuxième programme (6) du dispositif de traitement de données distant (2) est un programme de serveur (6).

18. Appareil automatisé selon l'une des revendications 15 à 17, dans lequel l'appareil automatisé est utilisé dans le domaine de la technique d'automatisation pour contrôler et observer notamment des commandes par programme enregistré, des commandes numériques et/ou des moteurs.

19. Appareil automatisé selon l'une des revendications 15 à 18, dans lequel le paramètre pouvant être prescrit (8) est formé au moins de parties de l'IDL (Interface Definition Language) transmis du premier programme (5) au deuxième programme (6).

20. Appareil automatisé selon l'une des revendications 15 à 19, dans lequel l'appareil automatisé est utilisé en relation avec des applications de client dans des systèmes intégrés dits Embedded, notamment dans des systèmes DCOM.
